# EUROPÄISCHE PATENTSCHRIFT

(11) **EP 2 615 886 B1**
(45) Veröffentlichungstag und Bekanntmachung des Hinweises auf die Patenterteilung: **30.05.2018**
(21) Anmeldenummer: 12195680.9
(22) Anmeldetag: 05.12.2012
(51) Int. Cl.: H05B 33/08, B60Q 1/14, B60Q 11/00

(54) **Temperaturüberwachung von Leuchtvorrichtungen**
Monitoring the temperature of lighting devices
Surveillance de température de dispositifs d'éclairage

(30) Priorität: 14.01.2012 DE 102012000623
(43) Veröffentlichungstag der Anmeldung: 17.07.2013
(73) Patentinhaber: Volkswagen Aktiengesellschaft, 38440 Wolfsburg (DE)
(72) Erfinder: Koppermann, Rolf, 38444 Wolfsburg (DE)

(56) Entgegenhaltungen:
- EP-A1- 2 058 174
- EP-A2- 2 157 371
- DE-A1- 10 335 293
- DE-A1- 19 625 889
- DE-A1-102004 047 685
- US-A1- 2002 149 895

## Beschreibung

Die vorliegende Anmeldung betrifft Verfahren und Vorrichtungen zur Temperaturüberwachung von Leuchtvorrichtungen, insbesondere von Leuchtvorrichtungen in einem Fahrzeug, beispielsweise von Scheinwerfern, Rücklichtern oder Teilen hiervon.

Für Leuchtvorrichtungen von Fahrzeugen, beispielsweise verschiedene Komponenten von Scheinwerfern oder Rücklichtern wie Tagfahrlicht, Kurvenlicht, Abblendlicht, Fernlicht, Rücklicht, Bremslicht oder Blinker, werden verschiedene Arten von Leuchtmitteln, beispielsweise Leuchtmittel auf Halbleiterbasis wie beispielsweise Leuchtdioden, Halogenlampen oder auch herkömmliche Glühbirnen verwendet. Derartige Leuchtmittel erwärmen sich im Allgemeinen, wenn sie eingeschaltet sind. Steigt die Temperatur zu sehr an, kann es vorkommen, dass die Leuchteigenschaften des jeweiligen Leuchtmittels beeinträchtigt werden, beispielsweise eine Lichtemission erniedrigt ist, oder das Leuchtmittel gar irreversibel beschädigt wird.

Diesbezüglich ist es aus der DE 10 2004 011 939 A1 bekannt, bei einer Fahrzeuglampe eine Temperatur in einer Lampenkammer mittels eines Sensors zu überwachen und eine Stromzufuhr an die Leuchtvorrichtung zu reduzieren, wenn die Temperatur einen vorgegebenen Schwellenwert überschreitet. Die dort offenbarte Vorrichtung benötigt jedoch einen Temperatursensor, welcher in einem relativ weiten Temperaturbereich funktionsfähig bleiben muss, da beispielsweise Kraftfahrzeuge im Winter Temperaturen auch weit unter dem Gefrierpunkt ausgesetzt sein können, während bei längerem Betrieb einer Leuchte beispielsweise im Sommer mit zusätzlicher Sonneneinstrahlung sehr hohe Temperaturen auftreten können.

Aus der DE 10 2004 047 685 A1 ist ein Verfahren gemäß dem Oberbegriff des Anspruchs 1 bekannt. Dabei kann ein Ausschalten einer Lichtquelle bzw. die Reduktion der Lichtintensität erfasst werden und bei der Berechnung der Temperatur berücksichtigt werden, wenn eine Abschaltung der Lichtquelle oder eine Verringerung der Lichtintensität vorgenommen wird, um die Lichtquelle vor Übertemperatur zu schützen.

Aus der EP 2 157 371 A2 ist es bekannt, eine Leistungsbilanz einer Leuchtvorrichtung zu erstellen, um eine Überhitzung zu verhindern. In diese Leistungsbilanz können auch externe Einflüsse wie Sonneneinstrahlung oder Motortemperatur einfließen.

Aus DE19625889 A1 ist ein Verfahren aus dem Bereich des Motorkühlmittelkreislaufs bekannt das beschreibt die aktuelle Motorkühlmitteltemperatur unter Einbeziehung von fahrzeugspezifischen Daten anhand eines Temperaturmodells fortwährend berechnet werden kann. Hierfür wird Erfindungsgemäß die Kühlmitteltemperatur zum Zeitpunkt des Abstellens des Antriebsmotors durch einen Sensor gemessen. Dies hat im Bereich der Kühlmitteltemperaturbestimmung den Vorteil, dass man nur noch einen Sensor zur Messung der Kühlmitteltemperatur benötigt, was gegenüber dem Stand der Technik zum Zeitpunkt von DE19625889 A1 vorteilhaft war, da ein zweiter Sensor zur Temperaturbestimmung bei abgeschaltetem Motor den beschriebenen Stand der Technik darstellte.
Es ist daher eine Aufgabe der vorliegenden Erfindung, Verfahren und Vorrichtung bereitzustellen, bei welchen eine Temperaturüberwachung einer Leuchtvorrichtung auch ohne einen derartigen Temperatursensor gewährleistet werden kann.

Diesbezüglich wird ein Verfahren nach Anspruch 1 sowie eine Vorrichtung nach Anspruch 12 bereitgestellt. Die Unteransprüche definieren weitere Ausführungsbeispiele.

Erfindungsgemäß wird ein Verfahren bereitgestellt, umfassend:
Erfassen einer Einschaltdauer einer Leuchtvorrichtung seit einem letzten Einschalten der Leuchtvorrichtung, und Berechnen einer geschätzten Temperatur der Leuchtvorrichtung in Abhängigkeit von der Einschaltdauer, wobei zum Bestimmen einer Starttemperatur die Temperatur der Leuchtvorrichtung bei einem Ausschalten einer Zündung und eine Standzeit eines Fahrzeugs mit der Leuchtvorrichtung herangezogen wird.

Auf diese Weise kann eine Temperatur einer Leuchtvorrichtung ohne Benutzung eines Temperatursensors geschätzt werden.

Das Berechnen kann dabei zusätzlich in Abhängigkeit von einer der Leuchtvorrichtung zugeführten elektrischen Leistung erfolgen.

Zusätzlich kann das Berechnen auch in Abhängigkeit von einer Ausschaltdauer der Leuchtvorrichtung seit einem letzten Ausschalten der Leuchtvorrichtung erfolgen. Dabei können insbesondere auch geschätzte Temperaturen zum Zeitpunkt eines Einschaltens oder Ausschaltens berücksichtigt werden.

Unter einer Leuchtvorrichtung ist dabei jegliche Licht emittierende Vorrichtung oder Teil hiervon zu verstehen, wobei eine derartige Leuchtvorrichtung ein oder mehrere Leuchtmittel wie Glühbirnen, Halogenlampen und/oder Leuchtdioden zum Emittieren von Licht aufweisen kann.

Das Berechnen der geschätzten Temperatur kann zusätzlich in Abhängigkeit von einer Umgebungstemperatur erfolgen, beispielsweise im Falle einer Leuchtvorrichtung eines Fahrzeugs in Abhängigkeit von der Außentemperatur des Fahrzeugs. Insbesondere bei Fahrzeugen sind Sensoren zur Messung der Außentemperatur häufig ohnehin vorhanden, so dass hierfür kein zusätzlicher Sensor nötig ist.

Die Temperatur kann auch zusätzlich in Abhängigkeit von einer additiven Funktion zur Berücksichtigung äußerer Einflüsse wie Sonneneinstrahlung oder Erwärmung durch andere Vorrichtungen, wie beispielsweise einen Motor eines Kraftfahrzeugs, erfolgen.

Bei einem Ausführungsbeispiel wird die Stromzufuhr zu der Leuchtvorrichtung verringert, wenn die geschätzte Temperatur einen ersten Temperaturschwellenwert übersteigt. Das Verringern der Stromzufuhr kann auch ein Ausschalten der Leuchtvorrichtung umfassen. Nach einer derartigen Verringerung der Stromzufuhr, beispielsweise einem Ausschalten, kann die Stromzufuhr erhöht werden, beispielsweise ein Einschaltvorgang durchgeführt werden, wenn die Temperatur einen zweiten Temperaturschwellenwert unterschreitet.

Auf diese Weise kann verhindert werden, dass durch Überhitzung Beschädigungen entstehen oder Beeinträchtigungen des Leuchtverhaltens auftreten.

Das Ein- und Ausschalten der Leuchtvorrichtung kann zusätzlich in Abhängigkeit von einem Schaltsignal, welches beispielsweise durch manuelle Betätigung beeinflusst werden kann, geschehen.

Zudem kann das Ein- und Ausschalten in Abhängigkeit von Umgebungsbedingungen, insbesondere einer Umgebungshelligkeit, bestehen. Beispielsweise kann bei Dunkelheit der erste Temperaturschwellenwert höher sein, um ein Verringern der Stromzufuhr in diesem Fall nur dann zu veranlassen, wenn andernfalls eine permanente Beschädigung der Leuchtvorrichtung zu erwarten wäre. Zudem kann die oben erwähnte additive Funktion und/oder die Umgebungstemperatur auch bei der Bestimmung der Temperaturschwellenwerte statt bei der Berechnung der geschätzten Temperatur berücksichtigt werden.

Eine entsprechende Vorrichtung umfasst eine Zeitmesseinrichtung zum Erfassen einer Einschaltdauer einer Leuchtvorrichtung seit einem letzten Einschalten der Leuchtvorrichtung und eine Berechnungseinrichtung, beispielsweise eine Steuervorrichtung, zum Berechnen einer geschätzten Temperatur der Leuchtvorrichtung in Abhängigkeit von der Einschaltdauer.

Zudem kann die Vorrichtung ein Stellglied zum Ein- und Ausschalten der Leuchtvorrichtung in Abhängigkeit von der geschätzten Temperatur umfassen.

Eine derartige Vorrichtung kann insbesondere in einem Fahrzeug, beispielsweise in einem Kraftfahrzeug, eingesetzt werden, um Temperaturen von Leuchtvorrichtungen des Fahrzeugs, beispielsweise Scheinwerfern oder Teilen hiervon, zu überwachen. Die Vorrichtung kann dabei insbesondere zur Durchführung eines oder mehrerer der oben angesprochenen Verfahren eingerichtet sein.

Die Erfindung wird nachfolgend unter Bezugnahme auf die beigefügte Zeichnung anhand von Ausführungsbeispielen näher erläutert. Es zeigen:
Fig. 1 ein Fahrzeug mit einer Vorrichtung gemäß einem Ausführungsbeispiel der Erfindung,
Fig. 2 ein schematisches Blockdiagramm eines Ausführungsbeispiels einer erfindungsgemäßen Vorrichtung,
Fig. 3 ein Flussdiagramm zur Veranschaulichung eines Ausführungsbeispiels eines erfindungsgemäßen Verfahrens, und
Fig. 4 ein Simulationsbeispiel eines Ausführungsbeispiels der Erfindung.

Im Folgenden werden Ausführungsbeispiele der vorliegenden Erfindung detailliert erläutert. Es ist zu bemerken, dass Merkmale verschiedener Ausführungsbeispiele miteinander kombiniert werden können, sofern nichts anderes angegeben ist. Auf der anderen Seite ist eine Beschreibung eines Ausführungsbeispiels mit einer Vielzahl von Merkmalen nicht dahingehend auszulegen, dass alle diese Merkmale zur Ausführung der Erfindung notwendig sind, da insbesondere andere Ausführungsbeispiele weniger Merkmale und/oder alternative Merkmale aufweisen können.

In Fig. 10 ist ein Fahrzeug 10, im vorliegenden Fall z.B. ein Personenkraftwagen, dargestellt, welcher mit einer Vorrichtung zur Temperaturüberwachung gemäß einem Ausführungsbeispiel der Erfindung ausgestattet. Die erfindungsgemäße Vorrichtung ist dabei insbesondere in Form einer Steuervorrichtung 11 mit einem Timer (Zeitmesser) 12 implementiert, welcher zur Durchführung erfindungsgemäßer Funktionen gemäß dem Ausführungsbeispiel eingerichtet, beispielsweise programmiert, ist.

Das Fahrzeug 10 weist dabei insbesondere zwei Frontscheinwerfer 14, 15 und zwei Rücklichter 16, 17 auf. Die Frontscheinwerfer 14, 15 können verschiedene Lichtfunktionen ausführen, z.B. Kurvenlicht, Tagfahrlicht, Abblendlicht, Fernlicht oder auch eine Blinkerfunktion. Entsprechend können auch die Rücklichter 16, 17 verschiedene Leuchtfunktionen ausführen, beispielsweise Rücklicht, Bremslicht, Nebelschlusslicht oder auch Blinker. Es ist zu bemerken, dass bei manchen Fahrzeugen z.B. Blinker oder andere Lichtfunktionen auch separat von weiteren Lichtfunktionen angeordnet sein können.

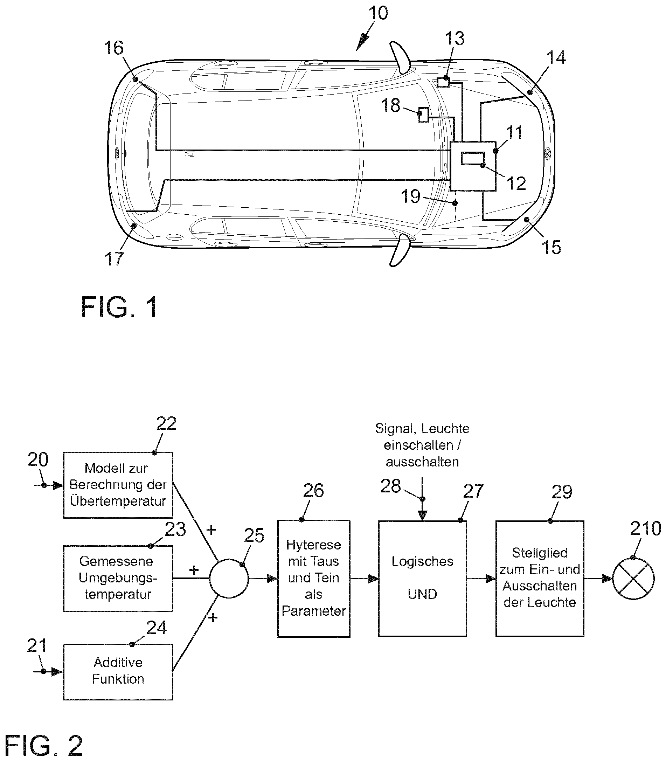

Zur Durchführung dieser Lichtfunktionen umfassen die Frontscheinwerfer 14, 15 und die Rücklichter 16, 17, im Folgenden zusammenfassend als Leuchten bezeichnet, verschiedene Leuchtmittel, beispielsweise Glühbirnen, Halogenlampen oder Leuchtdioden. Dabei können für verschiedene Leuchtfunktionen verschiedene Leuchtmittel vorgesehen sein, oder Leuchtmittel können für verschiedene Lichtfunktionen verschieden angesteuert werden. Beispielsweise kann eine Leistungszufuhr variiert werden, um zwischen verschiedenen Lichtfunktionen umzuschalten.
Bei dem Ausführungsbeispiel der Fig. 1 steuert die Steuereinrichtung 11, gegebenenfalls über (in Fig. 1 nicht dargestellte) Stellglieder, die Leuchten 14-17 an, um Lichtfunktionen ein- und auszuschalten bzw. eine Stromversorgung zu variieren. Dabei dient ein Bedienelement 18, welches in der Nähe eines Fahrers angeordnet ist, zum manuellen Ein- und Ausschalten von Lichtfunktionen, beispielsweise Abblendlicht oder Fernlicht, durch einen Fahrer des Fahrzeugs 10. Die Steuervorrichtung 11 steuert die Lichtfunktionen dann in Abhängigkeit von einem Zustand des Bedienelements.

Des Weiteren berechnet die Steuervorrichtung 11 eine Temperatur in den jeweiligen Leuchten oder Teilen hiervon, ohne dass hierfür ein Temperatursensor in den Leuchten notwendig ist. Insbesondere erfolgt die Berechnung, wie im Folgenden näher erläutert werden wird, in Abhängigkeit von Einschalt- und/oder Ausschaltdauern der Leuchten oder Teilen hiervon, welche mit einem Zeitmesser 12 gemessen werden, welcher beispielsweise ein getakteter Zähler sein kann. Die Berechnung der Temperatur kann dabei zudem in Abhängigkeit von einer Außentemperatur erfolgen, welche durch einen Außentemperatursensor 13 erfasst wird. Derartige Außentemperatursensoren sind in Fahrzeugen typischerweise ohnehin vorhanden.

Gegebenenfalls kann die Steuerung 11 hierzu auch noch weitere Informationen über eine Leitung 19 erhalten.

Zu bemerken ist, dass während in Fig. 1 Verbindungen zwischen verschiedenen Elementen als einzelne Leitungen dargestellt sind, derartige einzelne Leitungen aber auch ganz oder teilweise durch Verbindungen über ein Bussystem, beispielsweise ein CAN-Bus, oder durch drahtlose Verbindungen realisiert sein können.

In Fig. 2 ist ein Blockdiagramm zur Veranschaulichung der Funktion einer Vorrichtung gemäß einem Ausführungsbeispiel dargestellt. Es ist zu bemerken, dass, obwohl in Fig. 2 verschiedene Funktionen durch verschiedene Blöcke dargestellt sind, dies nicht notwendigerweise eine physikalisch getrennte Implementierung bedingt. Beispielsweise können mehrere der dargestellten Blöcke in einer gemeinsamen Steuervorrichtung, beispielsweise durch entsprechende Programmierung einer derartigen Steuervorrichtung wie der Steuervorrichtung 11 der Fig. 1, implementiert sein.

In Block 22 wird mittels eines Modells zur Berechnung einer Übertemperatur eine Übertemperatur der jeweiligen Leuchte oder Teils hiervon, im Folgenden allgemein als Leuchtvorrichtung bezeichnet, berechnet. Unter Übertemperatur ist dabei eine Temperatur relativ zur Umgebungstemperatur zu verstehen. Dies geschieht in Abhängigkeit beispielsweise von einer Einschaltzeit seit einem letzten Einschalten der Leuchtvorrichtung, einer der Leuchtvorrichtung zugeführten Leistung und gegebenenfalls in Abhängigkeit von einer vorangehenden Ausschaltdauer der Leuchtvorrichtung. Insbesondere kann das Modell berücksichtigen, dass im ausgeschalteten Zustand der Leuchtvorrichtung die Temperatur kontinuierlich sinkt, bis sie die Umgebungstemperatur erreicht, während sie im eingeschalteten Zustand kontinuierlich ansteigt, um sich beispielsweise asymptotisch einer Maximaltemperatur zu nähern. Dem Modell 22 werden dazu wie durch einen Pfeil 20 angedeutet entsprechende Eingangswerte wie Zeitdauer seit dem letzten Einschalten oder Leistungsaufnahme der Leuchtvorrichtung zugeführt.

Das Modell kann ein lineares Modell erster oder höherer Ordnung oder auch ein nichtlineares Modell sein. In anderen Worten kann grundsätzlich jede Funktion oder Berechnungsweise verwendet werden, welche das tatsächliche zeitliche Verhalten der Leuchtvorrichtung annähert. Parameter einer derartigen Berechnung können beispielsweise empirisch ermittelt werden, indem zur Einstellung des Modells Temperatursensoren zur Messung der Temperatur verwendet werden und die Parameter des Modells entsprechend angepasst werden, um den gemessenen Verlauf der Temperatur möglichst genau wiederzugeben.

Bei einem Ausführungsbeispiel kann das Modell die Übertemperatur beispielsweise gemäß

*ϑ*(*t*) = ϑ₀ (1- exp(- *α*(*t - t*₀))) (1)

berechnen, wobei t die Zeit seit dem letzten Einschalten der Leuchtvorrichtung, ϑ(t) die Übertemperatur der Leuchtvorrichtung in Abhängigkeit von dieser Zeit, ϑ₀ eine erreichbare Maximaltemperatur und α, t₀ weitere Konstanten sind. ϑ₀ und α können beispielsweise empirisch in Abhängigkeit von einer der Leuchtvorrichtung zugeführten Leistung bestimmt werden. Beispielsweise können für verschiedene zugeführte Leistungen die entsprechenden Konstanten in der Vorrichtung 11 der Fig. 1 oder Vorrichtung der Fig. 2 hinterlegt sein. t₀ kann beispielsweise von einer anfänglichen Übertemperatur abhängen.

Zu bemerken ist, dass im ausgeschalteten Zustand ein ähnlicher Zusammenhang angesetzt werden kann, wobei in diesem Fall dann α einen anderen Wert und ein anderes Vorzeichen hat.

Die oben stehende Gleichung ist lediglich als Beispiel zu verstehen, und wie bereits erläutert können im Wesentlichen beliebige Funktionen verwendet werden, mit welchen ein gemessener tatsächlicher Verlauf der Temperatur approximiert werden kann.
Die so berechnete Übertemperatur wird einem Addierer 25 zugeführt.

Zudem wird dem Addierer 25 eine gemessene Umgebungstemperatur 23 zugeführt, beispielsweise eine von dem Temperatursensor 13 der Fig. 1 gemessene Umgebungstemperatur.

Zusätzlich wird dem Addierer 45 das Ergebnis einer additiven Funktion 24 zugeführt, welche äußere Einflüsse auf die Temperatur der Leuchtvorrichtung berücksichtigt, beispielsweise eine Erwärmung durch Abwärme eines Motors des Fahrzeugs 10 oder einer Erwärmung durch Sonneneinstrahlung. Der additiven Funktion können dabei beispielsweise Motorparameter oder Temperaturinformationen, welche auf Sonneneinstrahlung hindeuten, wie durch einen Pfeil 21 angedeutet, zugeführt werden. Die additive Funktion kann experimentell bestimmt werden und hängt beispielsweise auch von der Lage der Leuchten und deren Isolierung zur Umgebung ab. Der Addierer 25 addiert die ihm zugeführten Ergebnisse, um eine geschätzte Übertemperatur der Leuchtvorrichtung zu erhalten.

In einem Hystereseblock 26 wird diese Temperatur mit Schwellenwerten Taus, Tein verglichen. Übersteigt die geschätzte Temperatur der Leuchtvorrichtung den Wert Taus, gibt der Hystereseblock 26 ein Signal aus, welches ein Ausschalten der Leuchtvorrichtung fordert. Unterschreitet die Temperatur dann durch Abkühlung während der ausgeschalteten Phase die Temperatur Tein, ändert sich das Signal, um ein Einschalten der Leuchtvorrichtung zu bewirken. Eine Temperaturdifferenz zwischen Taus und Tein wird dabei bevorzugt so gewählt, dass instabile Zustände, z.B. ein dauerndes Ein- und Ausschalten der Leuchtvorrichtung, vermieden werden.

Das von dem Hystereseblock 26 ausgegebene Signal wird in einem Block 27 mit einem Signal 28, welches ein Ein- oder Ausschalten der Leuchtvorrichtung fordert, logisch UND-verknüpft. Ein derartiges Signal kann beispielsweise durch das Betätigungselement 18 der Fig. 1 erzeugt werden. Der Block 27 gibt dann ein entsprechendes Signal an ein Stellglied 29 zum Ein- und Ausschalten einer Leuchtvorrichtung 210 aus, wobei die Leuchtvorrichtung 210 ein oder mehrere Leuchtmittel umfassen kann. Durch die logische UND-Verknüpfung des Blocks 27 wird also bewirkt, dass die Leuchtvorrichtung nur dann eingeschaltet wird, wenn zum einen die Temperatur unterhalb von Taus liegt und zum anderen ein Einschalten der Leuchte auch beispielsweise von einem Fahrer mittels Betätigung des Bedienelements 18 gewünscht wird. Zu bemerken ist, dass ein derartiges Signal 28 auch automatisch erzeugt werden kann, beispielsweise in Abhängigkeit von einer Umgebungshelligkeit, so dass bei Dunkelheit automatisch ein Signal zum Einschalten der Leuchtvorrichtung erzeugt wird, wenn das Fahrzeug in Betrieb gesetzt wird.

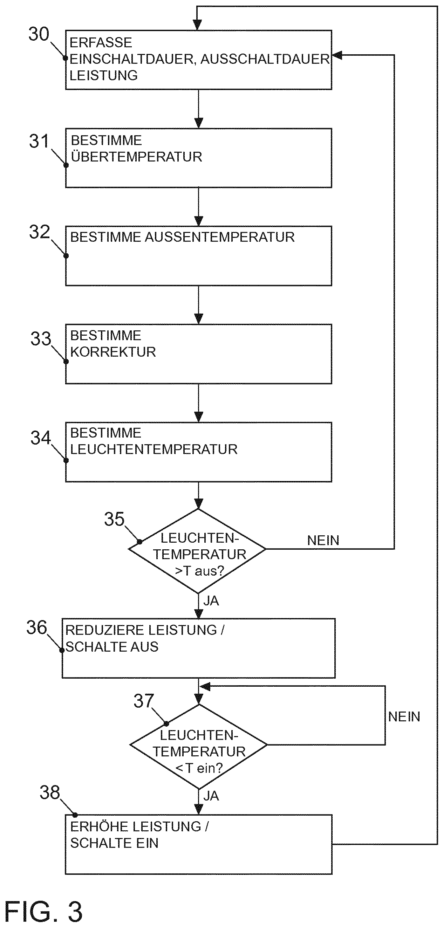

In Fig. 3 ist ein Flussdiagramm dargestellt, welches ein erfindungsgemäßes Verfahren gemäß einem Ausführungsbeispiel zeigt, welches beispielsweise durch die Vorrichtungen der Fig. 1 und 2 implementiert sein kann und welches die oben bereits angesprochene Funktionsweise näher erläutert.

Bei 30 werden für die Bestimmung einer Übertemperatur bei 31 benötigte Parameter erfasst, beispielsweise Einschaltdauer seit einem letzten Einschalten der Leuchtvorrichtung, Ausschaltdauer seit einem letzten Ausschalten der Leuchtvorrichtung oder der Leuchtvorrichtung zugeführte Leistung. Bei 31 wird dann die Übertemperatur der Leuchtvorrichtung, d.h. die Temperatur über der Umgebungstemperatur oder Außentemperatur, bestimmt, beispielsweise mittels eines Berechnungsmodells wie unter Bezugnahme auf Block 23 der Fig. 2 diskutiert. Bei 32 wird die Außentemperatur bestimmt, beispielsweise durch den Temperatursensor 13 der Fig. 1. Bei 33 wird eine Korrektur, z.B. als additive Funktion, zur Berücksichtigung von Umgebungseinflüssen wie unter Bezugnahme auf den Block 24 der Fig. 2 erläutert bestimmt.

Bei 34 wird dann in Abhängigkeit von der Übertemperatur, der Außentemperatur und der bestimmten Korrektur ein Schätzwert der Temperatur der Leuchtvorrichtung, in Fig. 3 auch kurz als Leuchtentemperatur bezeichnet, bestimmt. Zu Bemerken ist, dass eine "Starttemperatur" z.B. beim Einschalten der Zündung des Fahrzeugs ebenfalls mit Hilfe eines Berechnungsmodells geschätzt wird, wobei hierzu die Leuchtentemperatur beim Ausschalten der Zündung und die Standzeit des Fahrzeugs herangezogen werden. Bei 35 wird überprüft, ob diese Leuchtentemperatur über einem Ausschaltschwellenwert Taus liegt. Falls dies nicht der Fall ist, wird zu 30 zurückgesprungen, d.h. die geschätzte Temperatur wird kontinuierlich bestimmt. Falls dies hingegen der Fall ist, wird bei 36 die Leuchtvorrichtung ausgeschaltet oder zumindest die ihr zugeführte Leistung reduziert. Das Reduzieren der zugeführten Leistung kann dabei auch schrittweise erfolgen, beispielsweise, wenn ein erstes Reduzieren nicht ausreicht, die Temperatur zu senken. Nach dem Reduzieren der Leistung oder dem Ausschalten bei 36 wird, auch wenn dies in Fig. 3 nicht explizit dargestellt ist, die Temperaturschätzung (30-34) kontinuierlich weitergeführt, und es wird bei 37 kontinuierlich überprüft, ob die Leuchtentemperatur unter einen Einschaltschwellenwert Tein gefallen ist. Sobald dies der Fall ist, wird die Leuchtvorrichtung bei 38 wieder eingeschaltet bzw. die Leistung erhöht. Dann wird die Überwachung der Leuchtentemperatur bei 30 fortgesetzt.

Das oben beschriebene Ein- und Ausschalten geht dabei im Falle der Fig. 3 davon aus, dass ein Einschalten grundsätzlich erwünscht ist, beispielsweise ein entsprechendes Betätigungselement betätigt wurde.

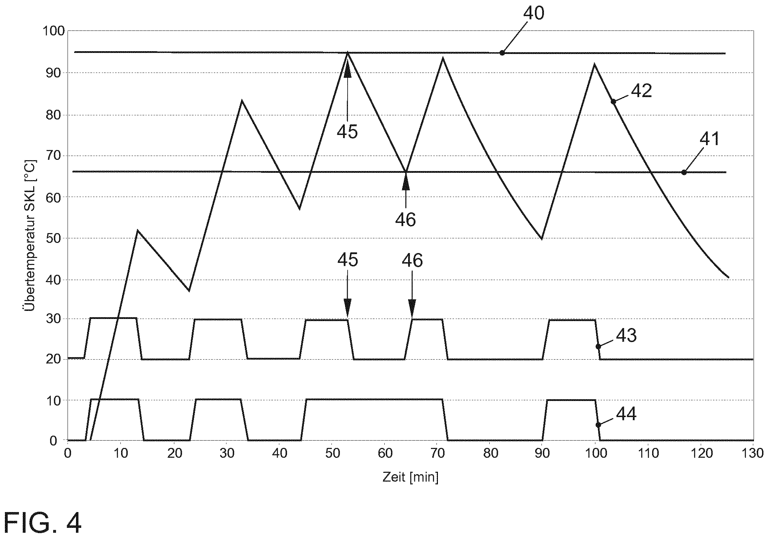

In Fig. 4 ist ein veranschaulichendes Simulationsbeispiel zur Veranschaulichung einer Funktionsweise von Ausführungsbeispielen der Erfindung dargestellt, wobei dieses Beispiel nur der weiteren Veranschaulichung der Erfindung dient und nicht als einschränkend auszulegen ist. Als Beispiel für eine Leuchtvorrichtung wurde in Fig. 4 ein statisches Kurvenlicht verwendet. Die Übertemperatur wird mit Hilfe eines linearen Modells erster Ordnung ähnlich der oben angegebenen Gleichung berechnet. Für die Simulation wurde die additive Funktion, d.h. Korrekturen durch Umgebungseinflüsse, sowie die Umgebungstemperatur auf 0 gesetzt, so dass in Fig. 4 in einer Kurve 42 nur die Übertemperatur der Leuchtvorrichtung über der Zeit in Minuten dargestellt ist. Eine Linie 40 zeigt den ersten Schwellenwert, d.h. den Ausschaltschwellenwert Taus, und eine Linie 41 zeigt den zweiten Schwellenwert, d.h. den Einschaltschwellenwert Tein. Wie zu sehen ist, kann der Ausschaltschwellenwert beispielsweise zwischen 90 °C und 100 °C liegen, und der Einschaltschwellenwert kann zwischen 60 °C und 70 °C liegen, wobei diese Werte lediglich als Beispiel zu sehen sind und insbesondere diese Werte für eine jeweilige Leuchtvorrichtung individuell angepasst werden können.

Eine Kurve 43 zeigt im Wesentlichen das Ausgangssignal des Blocks 27 aus Fig. 2, wobei ein hoher Pegel einem Einschalten der Leuchtvorrichtung und ein niedriger Pegel einem Ausschalten der Leuchtvorrichtung entspricht. Das Signal 44 entspricht dem Signal 28 der Fig. 2, d.h. einem Signal, welches angibt, ob zu einem jeweiligen Zeitpunkt ein Einschalten (logisch hoher Pegel) oder ein Ausschalten (logisch niedriger Pegel) der Leuchtvorrichtung erwünscht ist. Wie in Fig. 4 zu sehen, steigt bei eingeschalteter Leuchtvorrichtung die Temperatur gemäß Kurve 42 an, und bei ausgeschalteter Leuchtvorrichtung fällt die Temperatur ab. Wie weiter zu sehen ist, erreicht zu einem Zeitpunkt 45 die Temperatur den ersten Schwellenwert 40, was bewirkt, dass die Leuchtvorrichtung ausgeschaltet wird, obwohl gemäß dem Signal 44 ein Einschalten erwünscht wäre, um so eine Beschädigung der Leuchtvorrichtung zu vermeiden. Bei einem Zeitpunkt 46 ist die Temperatur dann auf dem zweiten Schwellenwert 41 abgefallen, so dass die Leuchtvorrichtung wieder eingeschaltet wird.

Wie bereits erläutert stellt die Fig. 4 dabei lediglich ein veranschaulichendes Beispiel dar, und insbesondere Ein- und Ausschaltzeiten ergeben sich aus einer jeweiligen Situation, beispielsweise einer Fahr- und Umgebungssituation des Fahrzeugs 10.

Wie aus den Figuren ersichtlich wird bei Ausführungsbeispielen die Temperatur stetig berechnet, d.h. die Temperatur während eines eingeschalteten Zustands wird ausgehend von der letzten Temperatur im ausgeschalteten Zustand berechnet, etc.

## Patentansprüche

1. Verfahren, umfassend:
Erfassen einer Einschaltdauer einer Leuchtvorrichtung (14, 15, 16, 17; 210) eines Fahrzeugs seit einem letzten Einschalten der Leuchtvorrichtung (14, 15, 16, 17; 210), und
Berechnen einer geschätzten Temperatur der Leuchtvorrichtung in Abhängigkeit von der Einschaltdauer,
**gekennzeichnet durch**
Heranziehen einer Temperatur der Leuchtvorrichtung (14, 15, 16, 17; 210) beim Ausschalten der Zündung des Fahrzeugs und Heranziehen der Standzeit des Fahrzeugs zum Bestimmen der Starttemperatur der Leuchtvorrichtung (14, 15, 16, 17; 21 0) beim Einschalten der Zündung des Fahrzeugs.

2. Verfahren nach Anspruch 1, **dadurch gekennzeichnet, dass** das Berechnen der geschätzten Temperatur zusätzlich in Abhängigkeit von einer der Leuchtvorrichtung (14, 15, 16, 17; 210) zugeführten elektrischen Leistung erfolgt.

3. Verfahren nach Anspruch 1 oder 2, **dadurch gekennzeichnet, dass** das Berechnen der geschätzten Temperatur zusätzlich in Abhängigkeit von einer Ausschaltdauer seit einem letzten Ausschalten der Leuchtvorrichtung (14, 15, 16, 17) erfolgt.

4. Verfahren nach einem der Ansprüche 1-3, **dadurch gekennzeichnet, dass** das Berechnen der geschätzten Temperatur zusätzlich in Abhängigkeit von einer Umgebungstemperatur der Leuchtvorrichtung vorgenommen wird.

5. Verfahren nach einem der Ansprüche 1-4, **dadurch gekennzeichnet, dass** das Berechnen der geschätzten Temperatur zusätzlich in Abhängigkeit von einer additiven Funktion zur Berücksichtigung von äußeren Einflüssen vorgenommen wird.

6. Verfahren nach Anspruch 5, wobei die äußeren Einflüsse eine Sonneneinstrahlung und/oder eine Erwärmung durch einen Antrieb eines Fahrzeugs umfassen.

7. Verfahren nach einem der Ansprüche 1-6, weiter umfassend ein Verringern einer Stromzufuhr an die Leuchtvorrichtung, wenn die geschätzte Temperatur einen ersten Temperaturschwellenwert übersteigt.

8. Verfahren nach Anspruch 7, wobei das Verringern der Stromzufuhr ein Ausschalten der Leuchtvorrichtung (14, 15, 16, 17) umfasst.

9. Verfahren nach Anspruch 7 oder 8, wobei das Verfahren weiter ein Erhöhen der Stromzufuhr nach dem Erniedrigen der Stromzufuhr umfasst, wenn die geschätzte Temperatur einen zweiten Temperaturschwellenwert unterschreitet.

10. Verfahren nach Anspruch 9, wobei das Erhöhen der Stromzufuhr ein Einschalten der Leuchtvorrichtung (14, 15, 16, 17) umfasst.

11. Verfahren nach einem der Ansprüche 7-10, wobei das Verringern der Stromzufuhr und/oder das Erhöhen der Stromzufuhr zusätzlich in Abhängigkeit von einem gewünschten Betriebszustand (28) der Leuchtvorrichtung (14, 15, 16, 17) vorgenommen wird.

12. Vorrichtung zur Temperaturüberwachung einer Leuchtvorrichtung (14, 15, 16, 17) eines Fahrzeugs, umfassend:
eine Zeitmesseinrichtung (12) zum Erfassen einer Einschaltdauer der Leuchtvorrichtung (14, 15, 16, 17; 210) seit einem letzten Einschalten der Leuchtvorrichtung (14, 15, 16, 17; 210), und eine Berechnungseinrichtung (11) zum Berechnen einer geschätzten Temperatur der Leuchtvorrichtung (14, 15, 16, 17; 210) in Abhängigkeit von der Einschaltdauer,
**dadurch gekennzeichnet,**
**dass** die Vorrichtung ausgestaltet ist, die Starttemperatur der Leuchtvorrichtung (14, 15, 16, 17; 210) beim Einschalten der Zündung des Fahrzeugs unter Heranziehung einer Temperatur der Leuchtvorrichtung (14, 15, 16, 17; 210) beim Ausschalten der Zündung des Fahrzeugs und unter Heranziehung der Standzeit des Fahrzeugs zu bestimmen.

13. Vorrichtung nach Anspruch 12, weiter umfassend ein Stellglied (29) zum Schalten der Leuchtvorrichtung (210) in Abhängigkeit von der berechneten geschätzten Temperatur.

14. Vorrichtung nach einem der Ansprüche 12-13, **dadurch gekennzeichnet, dass** die Vorrichtung zur Durchführung des Verfahrens nach einem der Ansprüche 1-10 ausgestaltet ist.

15. Fahrzeug (10) umfassend mindestens eine Leuchtvorrichtung (14, 15, 16, 17; 210) und eine Vorrichtung nach einem der Ansprüche 12-14.

## Claims

1. Method comprising:
detecting a switch-on period of a lighting device (14, 15, 16, 17; 210) of a vehicle since the lighting device (14, 15, 16, 17; 210) was last switched on, and calculating an estimated temperature of the lighting device as a function of the switch-on period,
**characterized by**
using a temperature of the lighting device (14, 15, 16, 17; 210) when the ignition of the vehicle is switched off, and using the immobilization time of the vehicle to determine the starting temperature of the lighting device (14, 15, 16, 17; 210) when the ignition of the vehicle is switched on.

2. Method according to Claim 1, **characterized in that** the estimated temperature is additionally calculated as a function of an electrical power value which is fed to the lighting device (14, 15, 16, 17; 210).

3. Method according to Claim 1 or 2, **characterized in that** the estimated temperature is additionally calculated as a function of a switch-off period since the lighting device (14, 15, 16, 17) was last switched off.

4. Method according to one of Claims 1-3, **characterized in that** the estimated temperature is additionally calculated as a function of an ambient temperature of the lighting device.

5. Method according to one of Claims 1-4, **characterized in that** the estimated temperature is additionally calculated in dependence on an additive function for taking into account external influences.

6. Method according to Claim 5, wherein the external influences comprise solar radiation and/or heating as a result of a drive of a vehicle.

7. Method according to one of Claims 1-6, further comprising reduction of a power supply to the lighting device if the estimated temperature exceeds a first temperature threshold value.

8. Method according to Claim 7, wherein the reduction of the power supply comprises switching off the lighting device (14, 15, 16, 17).

9. Method according to Claim 7 or 8, wherein the method also comprises increasing the power supply after the decreasing of the power supply if the estimated temperature undershoots a second temperature threshold value.

10. Method according to Claim 9, wherein the increasing of the power supply comprises switching on the lighting device (14, 15, 16, 17).

11. Method according to one of Claims 7-10, wherein the reduction of the power supply and/or the increasing of the power supply are additionally carried out as a function of a desired operating state (28) of the lighting device (14, 15, 16, 17).

12. Device for monitoring the temperature of a lighting device (14, 15, 16, 17) of a vehicle, comprising:
a timing device (12) for detecting a switch-on period of the lighting device (14, 15, 16, 17; 210) since the lighting device (14, 15, 16, 17; 210) was last switched on, and a calculation device (11) for calculating an estimated temperature of the lighting device (14, 15, 16, 17; 210) as a function of the switch-on period, **characterized**
**in that** the device is configured to determine the starting temperature of the lighting device (14, 15, 16, 17; 210) when the ignition of the vehicle is switched on, using a temperature of the lighting device (14, 15, 16, 17; 210) when the ignition of the vehicle is switched off and using the immobilization time of the vehicle.

13. Device according to Claim 12, also comprising an actuator element (29) for switching the lighting device (210) as a function of the calculated estimated temperature.

14. Device according to one of Claims 12-13, **characterized in that** the device is configured to carry out the method according to one of Claims 1-10.

15. Vehicle (10) comprising at least one lighting device (14, 15, 16, 17; 210) and a device according to one of Claims 12-14.

## Revendications

1. Procédé comprenant :
détection d'une durée d'allumage d'un dispositif d'éclairage (14, 15, 16, 17 ; 210) d'un véhicule depuis un dernier allumage du dispositif d'éclairage (14, 15, 16, 17 ; 210), et
calcul d'une température estimée du dispositif d'éclairage en fonction de la durée d'allumage,
**caractérisé par**
mise à contribution d'une température du dispositif d'éclairage (14, 15, 16, 17 ; 210) lors de la coupure du contact de l'allumage du véhicule et mise à contribution du temps d'arrêt du véhicule pour déterminer la température de démarrage du dispositif d'éclairage (14, 15, 16, 17 ; 210) lors de la mise du contact de l'allumage du véhicule.

2. Procédé selon la revendication 1, **caractérisé en ce que** le calcul de la température estimée est en plus effectué en fonction d'une puissance électrique acheminée au dispositif d'éclairage (14, 15, 16, 17 ; 210).

3. Procédé selon la revendication 1 ou 2, **caractérisé en ce que** le calcul de la température estimée est en plus effectué en fonction d'une durée d'extinction de puis la dernière extinction du dispositif d'éclairage (14, 15, 16, 17 ; 210).

4. Procédé selon l'une des revendications 1 à 3, **caractérisé en ce que** le calcul de la température estimée est en plus effectué en fonction d'une température ambiante du dispositif d'éclairage.

5. Procédé selon l'une des revendications 1 à 4, **caractérisé en ce que** le calcul de la température estimée est en plus effectué en fonction d'une fonction additive servant à prendre en compte les influences extérieures.

6. Procédé selon la revendication 5, **caractérisé en ce que** les influences extérieures comprennent un rayonnement solaire et/ou un échauffement par un mécanisme propulseur d'un véhicule.

7. Procédé selon l'une des revendications 1 à 6, comprenant en outre une réduction du courant acheminé au dispositif d'éclairage lorsque la température estimée dépasse une première valeur de seuil de température.

8. Procédé selon la revendication 7, la réduction du courant acheminé comprenant une extinction du dispositif d'éclairage (14, 15, 16, 17).

9. Procédé selon la revendication 7 ou 8, le procédé comprenant en outre une augmentation du courant acheminé après la diminution du courant acheminé lorsque la température estimée devient inférieure à une deuxième valeur de seuil de température.

10. Procédé selon la revendication 9, l'augmentation du courant acheminé comprenant un allumage du dispositif d'éclairage (14, 15, 16, 17).

11. Procédé selon l'une des revendications 7 à 10, la réduction du courant acheminé et/ou l'augmentation du courant acheminé étant en plus effectuées en fonction d'un état opérationnel souhaité (28) du dispositif d'éclairage (14, 15, 16, 17).

12. Dispositif de surveillance de la température d'un dispositif d'éclairage (14, 15, 16, 17) d'un véhicule, comprenant :
un appareil de mesure du temps (12) destiné à acquérir une durée d'allumage du dispositif d'éclairage (14, 15, 16, 17 ; 210) depuis un dernier allumage du dispositif d'éclairage (14, 15, 16, 17 ; 210), et
un appareil de calcul (11) destiné à calculer une température estimée du dispositif d'éclairage (14, 15, 16, 17 ; 210) en fonction de la durée d'allumage, **caractérisé en ce que**
le dispositif est conçu pour déterminer la température de démarrage du dispositif d'éclairage (14, 15, 16, 17 ; 210) lors de la mise du contact de l'allumage du véhicule en mettant à contribution une température du dispositif d'éclairage (14, 15, 16, 17 ; 210) lors de la coupure du contact de l'allumage du véhicule et en mettant à contribution le temps d'arrêt du véhicule.

13. Dispositif selon la revendication 12, comprenant en outre un actionneur (29) destiné à commuter le dispositif d'éclairage (210) en fonction de la température estimée calculée.

14. Dispositif selon l'une des revendications 12 à 13, **caractérisé en ce que** le dispositif est conçu pour mettre en oeuvre le procédé selon l'une des revendications 1 à 10.

15. Véhicule (10) comprenant au moins un dispositif d'éclairage (14, 15, 16, 17 ; 210) et un dispositif selon l'une des revendications 12 à 14.
